# EUROPEAN PATENT APPLICATION

(11) **EP 1 958 524 A1**
(43) Date of publication of application: **20.08.2008**
(21) Application number: 07010585.3
(22) Date of filing: 29.05.2007
(51) Int. Cl.: A41C 3/12, A41C 5/00, A41H 43/04

(54) **Apparatus for seamless applying to a bra a casing for housing a bra-cup supporting element**

(30) Priority: 16.02.2007 IT MI20070299
(71) Applicant: MACPI PRESSING DIVISION S.P.A., 25036 Palazzolo Sull'Oglio BS (IT)
(72) Inventor: Cartabbia, Giovanni, 25036 Palazzolo sull'Oglio Brescia (IT)
(74) Representative: Cicogna, Franco

(57) **Abstract**

An apparatus for applying to the cups of a bra, or to the overall bra, a casing for housing therein a cup supporting element, comprises at least two bobbins, one supporting a resilient element or casing, and the other supporting an adhesive having a protective silicone processed paper, a first hot-applying device for binding the casing to the adhesive material, and a programmable tensioning device, applying to the adhesive processed casing an adjustable pulling force.

## Description

### BACKGROUND OF THE INVENTION

The present invention relates to an apparatus for applying to the cups of a bra, or to an overall bra, a casing for engaging therein a supporting metal element, which is coupled by an adhesive material, without performing seaming operations.

The subject apparatus alternatively provides a casing by using a textile covering element and two lateral adhesive strips, without performing stitching or seaming operations.

Bras including a rigid supporting metal element, engaged in an edge or hem of each bra cup for properly supporting and shaping the cup, are already known.

The cup hem portion providing the supporting metal element seat or recess is conventionally seamed and this seam, together with the thickness of the metal supporting element, is irritating for the user and, moreover, provides the overall bra with an unaesthetic aspect.

### SUMMARY OF THE INVENTION

Accordingly, the aim of the present invention is to provide an apparatus for applying to the cups of a bra, or to an overall bra, a supporting metal element, and overcoming the above mentioned drawbacks, affecting the prior art.

Within the scope of the above mentioned aim, a main object of the invention is to provide such an apparatus allowing to easily form a recess for the supporting metal element, which has a very small thickness and does not cause irritations during the use of the bra.

A further object of the invention is to provide such an apparatus allowing to easily apply to a bra a casing for housing therein the above mentioned supporting metal element, without performing seaming or stitching operations but by merely using an adhesive material.

Yet another object of the present invention is to provide such an apparatus which is very quick, accurate and safe in operation.

According to one aspect of the present invention, the above mentioned aim and objects, as well as yet other objects, which will become more apparent hereinafter, are achieved by an apparatus for applying to the cups of a bra, or to an overall bra, a casing for housing therein a supporting metal element, without performing seaming operations, characterized in that said apparatus comprises at least two bobbins, a first bobbin supporting a resilient element or a casing, and a second bobbin, supporting an adhesive material protected by a silicone processed paper material, a first hot coupling device, to hot coupling said casing or resilient element and said adhesive material, a programmable tensioning device, applying to said adhesive processed casing or resilient element an adjustable tension, providing, after having applied the bra cups or the overall bra to the resilient element, a target holding force, a second hot applying device, for coupling the adhesive processed casing or resilient element to a cup of said bra or to said overall bra, pressing and guiding means, and a feeding and pressing device for feeding the bra cup or overall bra, while allowing said bra cup to automatically turn as said casing is hot glued, and trimming means for trimming said bra cup or overall bra, and cutting means for cutting the adhesive processed casing.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:

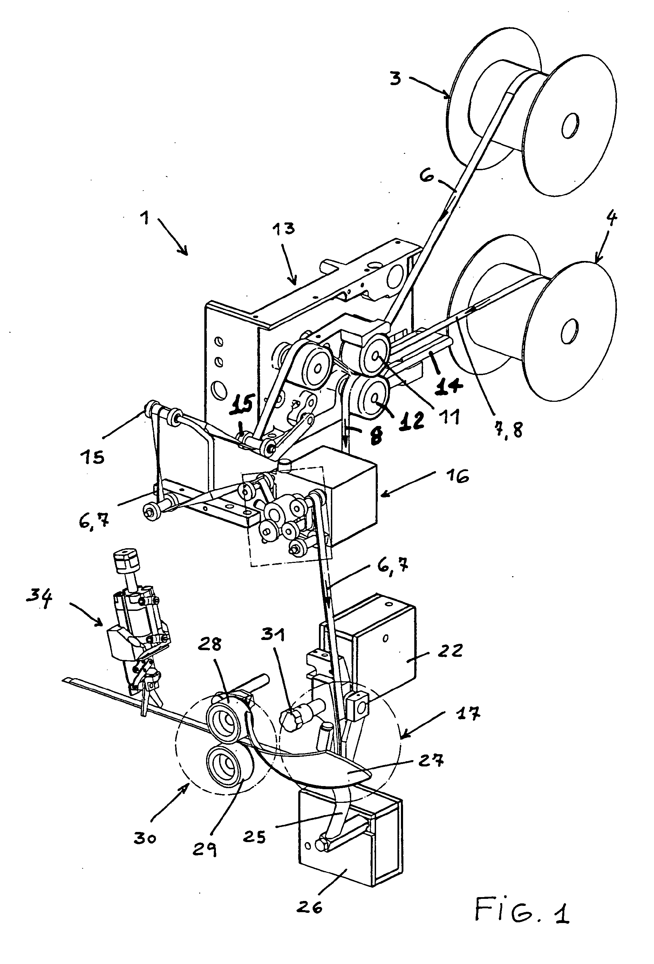

Figure 1 is a schematic perspective view showing the apparatus according to the invention;

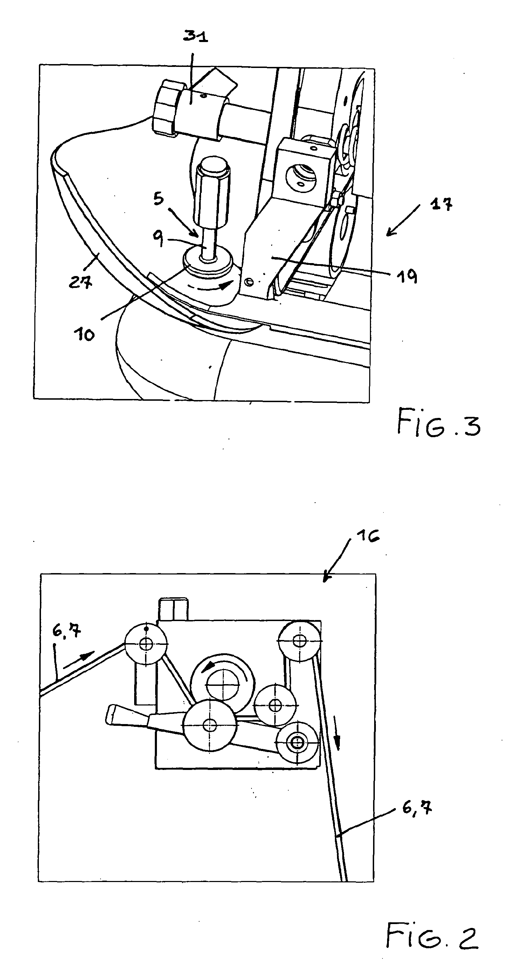

Figure 2 is a side elevation view showing a programmable tensioning or pulling device included in a first module of the apparatus according to the invention;
Figure 3 is a schematic perspective view showing the applying device;

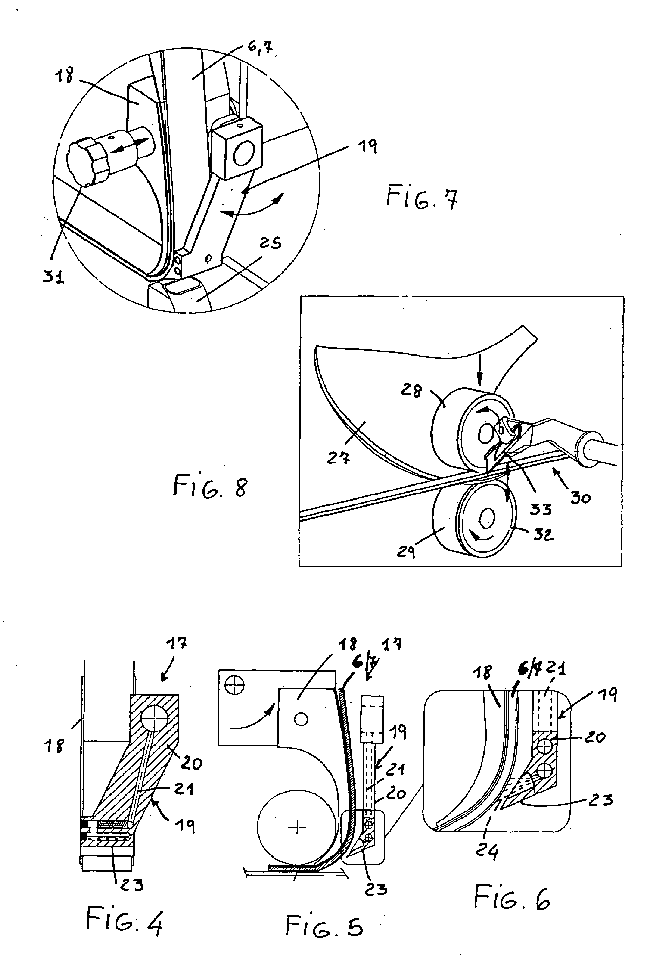

Figure 4 is a front elevation view, as partially cross-sectioned, showing the applying device;
Figure 5 is a side elevation view, as partially cross-sectioned, showing the applying device;
Figure 6 is a detailed view, on an enlarged scale with respect to the preceding figures, showing in a detailed manner the top hot air delivery means of the applying device;
Figure 7 is an enlarged perspective view showing the hot guide of the applying device;
Figure 8 is a side perspective view showing a trimming or cutting knife;
   and
Figures 9 to 12 show some possible embodiments for applying a resilient element, by using the apparatus according to the present invention.

### DESCRIPTION OF THE PREFERRED EMBODIMENTS

With reference to the number references of the above mentioned figures, the apparatus according to the present invention, which has been generally indicated by the reference number 1, comprises two bobbins, that is a first bobbin 3 supporting a resilient element 6, and a second bobbin 4 supporting a first adhesive material 7, protected by a "siliconized" or silicone processed paper material 8.

More specifically, said resilient element 6 may have a tubular casing configuration or shape.

The two bobbins 3 and 4, respectively supporting the adhesive material 7 and casing 6, allow said adhesive material 7 and casing 6 to be properly fed, to be hot coupled by a pair of pressing rollers 11 and 12 of a first applying device 13.

As stated, such a coupling is a hot type of coupling.

More specifically, the adhesive material or tape 7 is so conveyed as to contact a heated plate 14, having a variable temperature, depending on the used adhesive material, said temperature varying preferably from 70 to 200°C.

Said pressing roller pair 11 and 12 operates to connect or bind said casing 6 and adhesive material or tape 7, applied to said casing.

Immediately after having coupled said materials or elements, the protective siliconized paper material 8 covering the adhesive layer is removed.

Then, after having coated the casing 6, either fully or partially, by an adhesive layer 7, said casing 6 is conveyed to a swinging element 15, for removing a possible stress caused by the resilient element during the preceding processing operations.

Then, the adhesive processed casing enters a programmable tensioning device 16, which subjects said casing or resilient element to an adjustable tension or pulling force, to provide, after having applied a bra cup or the overall bra to the resilient element, a target holding force.

More specifically, for applying the casing 6 to the bra cup or to the overall bra, as indicated by the reference number 27, a second hot applying device, generally indicated by the reference number 17, is herein used.

In particular, said hot applying device 17 comprises a hot guide 18, thereat a top hot air delivery element 19 is arranged.

Said hot air delivery element 19 comprises a swinging block 20, including a hot air duct 21, coupled to a top air overheater 22.

Said swinging block 20 has a bottom end portion including a delivery spout 23, to convey a front hot air flow 24, either of a single or double configuration, onto the casing 6/7.

Said hot guide 18 comprises an adjusting device for centering said hot guide, said adjusting device including a knob 31 operating a threaded element coupled to said hot guide.

Thus, as the threaded element is manually turned, the hot guide is laterally displaced.

Consequently the bra cup or overall bra 27 is heated by a bottom hot air delivery element 25 in turn supplied by a bottom air overheater 26.

More specifically, the hot application of the adhesive processed casing to the bra cup, or to the overall bra is performed at a coupling bottom panel, or floor, where, in addition to said adjustable guide 18, is moreover provided a pressing element 5 and a feeding and pressing device 30, for causing said bra cup or overall bra to be fed, while allowing the bra cup to be automatically rotated during the casing hot glueing operation.

In this connection, it should be pointed out that said feeding and pressing device 30 comprises two pressing rollers 28 and 29, one of which includes a bottom rotary counterblade 32, whereas the other comprises a top swinging blade 33.

Said two rollers are designed for trimming or cutting away the hem portion of the bra cup or of the overall bra.

More specifically, the bottom roller 29 supports, on an outer portion thereof, a rotary cutting counterblade 32, cooperating with a top knife 33, which is driven by a reciprocating type of movement and performs a cutting through the exceeding fabric material.

The two rollers or wheels 28 and 29, forming calandering rollers, comprise a resilient covering layer.

The apparatus according to the invention comprises furthermore a cutting device 34, for cutting through the casing and adhesive material or tape.

In this connection it should be pointed out that the orienting pressing element 5, arranged at the working floor or bed of the machine, comprises a movable rod element 9, which can be lowered and downward driven by an expanding spring.

In particular, said orienting pressing element comprises a disc like member 10, having a downward directed convexity, which can be rotatively driven so as to cause the bra cup to perform a corresponding rotary movement.

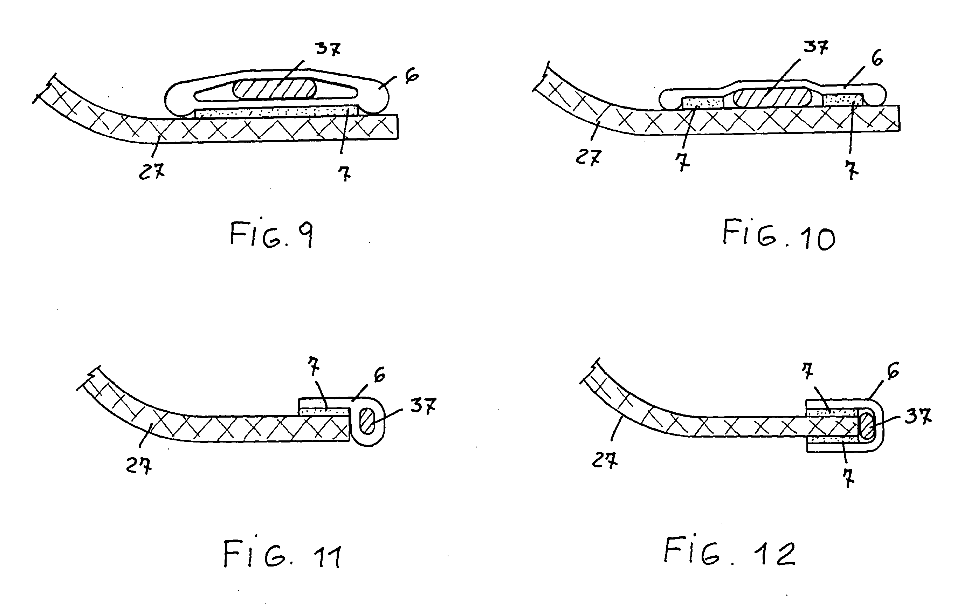

Figure 9 shows an exemplary embodiment for applying the resilient casing 6 to a bra cup 27, through the adhesive material or tape 7.

As applied, the resilient casing 6 allows a supporting metal element 37 to be engaged therein.

By changing the guide devices, it would be possible to perform application operations as shown in figure 11.

If the above mentioned resilient casing is made of a textile covering element and two adhesive material strips, as, for example, is shown in figure 10, then the inventive apparatus can be used with two bobbins designed for respectively delivering a textile covering element and a siliconized paper material strip, to which suitable spaced adhesive bead or strips are applied.

Then, by changing the guide devices and the position of the heating means, it is possible to perform the application operations shown in figure 12.

It has been found that the invention fully achieves the intended aim and objects.

In practicing the invention, the used materials, as well as the contingent size and shapes, can be any, according to requirements.

## Claims

1. An apparatus for applying to the cups of a bra, or to an overall bra, a casing for receiving a supporting metal element, without performing seaming operations, **characterized in that** said apparatus comprises at least two bobbins, with a first bobbin supporting a resilient element or casing, and with the second bobbin supporting an adhesive material protected by a silicone processed paper material, a first hot applying device for hot applying said resilient element or casing to said adhesive material, and a programmable tensioning device applying to said adhesive processed resilient element or casing an adjustable tension, for providing, after having applied the bra cup, or the overall bra, to said resilient element, a target holding force.

2. An apparatus according to claim 1, **characterized in that** said apparatus comprises a second hot applying device for coupling said adhesive processed resilient element or casing to said bra cup or overall bra, pressing and guiding means, and a feeding and pressing device for feeding said bra cup or overall bra to be fed, while allowing said bra cup to be automatically turned as said resilient casing is hot glued.

3. An apparatus according to claim 1, **characterized in that** said apparatus comprises moreover trimming means for trimming said bra cup or overall bra and further cutting means for cutting through said adhesive processed casing.

4. An apparatus according to claim 1, **characterized in that** said resilient element is a tubular casing element.

5. An apparatus according to claim 1, **characterized in that** said two bobbins supporting said adhesive material and casing allow said adhesive material and casing to be fed for a hot coupling to a pair of pressing rollers in said first applying device.

6. An apparatus according to claim 1, **characterized in that** said adhesive material or tape is so conveyed as to contact a heated plate which is heated to a varying temperature, depending on an adhesive material type being used, said temperature being preferably from 70°C to 200°C.

7. An apparatus according to claim 1, **characterized in that** said pressing roller pair is adapted to connect said casing and adhesive material applied to said casing.

8. An apparatus according to claim 7, **characterized in that**, immediately after having applied said casing and adhesive material, said protective siliconized paper material covering said adhesive layer is removed.

9. An apparatus according to claim 1, **characterized in that**, after having covered said casing, either fully or partially, by an adhesive layer, said casing is conveyed to a swinging element for releasing a possible stress caused by said resilient element.

10. An apparatus according to claim 1, **characterized in that** said adhesive processed casing is fed to said programmable tensioning device to apply to said adhesive processed casing an adjustable tension or pulling force, providing said bra cup or overall bra with a desired holding force.

11. An apparatus according to claim 10, **characterized in that** said casing is applied to said bra cup or overall bra by the second hot applying device comprising a hot guide.

12. An apparatus according to claim 11, **characterized in that** said hot guide comprises a top hot air delivery device.

13. An apparatus according to claim 12, **characterized in that** said top hot air delivery device comprises a swinging block including a hot air duct coupled to a top air overheater, said swinging block having a bottom end portion including a delivery spout for conveying a front hot air flow, either of a single or a double type, onto said casing.

14. An apparatus according to claim 11, **characterized in that** said hot guide comprises a hot guide centering adjusting device, including a centering knob driving a threaded element coupled to said hot air guide.

15. An apparatus according to claim 1, **characterized in that** said bra cup or overall bra is heated by a bottom hot air delivery device, being supplied by a bottom air overheater.

16. An apparatus according to claim 1, **characterized in that** said adhesive processed casing is applied to said bra cup or said bra at a coupling bed where, in addition to an adjustable abutting guide, is arranged a pressing device, said feeding and pressing device, for feeding said bra cup or overall bra, causing said bra cup to be automatically turned as said casing is hot glued.

17. An apparatus according to claim 16, **characterized in that** said feeding and pressing device comprises a pair of pressing rollers, one of said rollers including a bottom rotary counterblade, and the other of said pressing rollers including a swinging top blade, said two rollers trimming a hem portion of said cup bra or said overall bra.

18. An apparatus according to claim 17, **characterized in that** said bottom roller has an outer portion thereof bearing a rotary cutting counterblade, cooperating with a top knife, which is reciprocatedly driven for cutting an exceeding fabric material.

19. An apparatus according to claim 17, **characterized in that** said two rollers are calandering rollers including a resilient covering layer.

20. An apparatus according to claim 1, **characterized in that** said apparatus further comprises a cutting device for cutting through said casing and adhesive material.

21. An apparatus according to claim 15, **characterized in that** said pressing element, arranged at said working bed of said apparatus comprises a lowering rod which is downward urged by an expanding spring.

22. An apparatus according to claim 21, **characterized in that** said orienting pressing element comprises a disc element having a downward directed convexity, and rotatively driven so as to cause said bra cup to perform a corresponding rotary movement.

23. An apparatus according to claim 1, **characterized in that** said casing is made with a textile covering element and two adhesive material strips, said apparatus including two bobbins for respectively delivering a textile covering element and two siliconized paper material strips, thereon two spaced adhesive strips are applied.

24. An apparatus according to claim 1, **characterized in that** said apparatus comprises means for changing said guide devices and a heating position, to modify the position of said casing with respect to a hem portion of said bra cup or overall bra.

25. A method for applying to the cups of a bra or to an overall bra, a casing for receiving a supporting metal element, without performing seam operations, **characterized in that** said method comprises the steps of:
applying a first adhesive layer on a resilient casing or element;
removing from said first adhesive layer a siliconized paper material coating layer;
applying the adhesive processed casing on a bra cup or an overall bra, by a hot air bottom heating, front pre-heating, roller pressing and exceeding material cutting;
engaging a supporting metal element into the casing applied to said bra cup or said overall bra.

26. A bra cup or an overall bra, **characterized in that** said bra cup or overall bra comprises a bra cup hem including a supporting metal element applied to said bra cup hem through an adhesive material, without seams, said casing housing a supporting metal element therein.

27. A bra cup or an overall bra, according to claim 26, **characterized in that** said casing comprises a tubular element applied to a cup hem portion through an adhesive material.

28. A bra cup or an overall bra, according to claim 26, **characterized in that** said casing comprises a textile covering element applied to said hem by two spaced adhesive material strips.
